# EUROPEAN PATENT SPECIFICATION

(11) **EP 3 227 099 B1**
(45) Date of publication and mention of the grant of the patent: **18.11.2020**
(21) Application number: 15823384.1
(22) Date of filing: 30.11.2015
(51) Int. Cl.: B29D 30/06, B29D 30/00

(54) **PROCESS FOR PRODUCING TYRES PROVIDED WITH AUXILIARY COMPONENTS AND TYRE HAVING AN AUXILIARY COMPONENT**
VERFAHREN ZUR HERSTELLUNG VON REIFEN MIT ZUSATZKOMPONENTEN UND REIFEN MIT EINER ZUSATZKOMPONENTE
PROCÉDÉ DE PRODUCTION DE PNEUMATIQUES POURVUS DE PIÈCES AUXILIAIRES ET PNEUMATIQUE AYANT UNE PIÈCE AUXILIAIRE

(30) Priority: 01.12.2014 IT MI20142061
(43) Date of publication of application: 11.10.2017
(73) Proprietor: Pirelli Tyre S.p.A., 20126 Milano (IT)
(72) Inventor: PUPPI, Cristiano, I-20126 Milano (IT); MARCHINI, Maurizio, 20038 Seregno (MB) (IT); BERENGUER, Albert, I-20126 Milano (IT); BOSCAINO, Ivan Gildo, I-20126 Milano (IT)
(74) Representative: PGA S.p.A.
(86) International application number: PCT/IB2015/059206
(87) International publication number: WO 2016/088014

(56) References cited:
- WO-A1-2013/111073
- JP-A- H04 148 921
- JP-A- S56 162 634
- JP-A- 2003 090 721
- US-A1- 2004 103 967
- US-B1- 6 494 543

## Description

The present invention relates to a process for producing tyres provided with auxiliary components, for example sound-absorbent polymer foams for reducing the transmission of the noise of the tyre and/or monitoring devices like temperature and/or pressure sensors, and/or sealing complexes in self-sealing tyres.

### STATE OF THE ART

A tyre for vehicle wheels generally comprises a carcass structure comprising at least one carcass ply having respectively opposite end flaps engaged with respective anchoring annular structures, integrated in the zones normally identified with the name of "beads".

In radially outer position with respect to the carcass structure, a tread band is applied, it too comprising elastomeric material like other constituent semi-finished products of the tyre.

In the tyre, the crown portion is identified as the tyre portion where the tread is arranged; the crown portion is axially comprised between the two edges of the tread.

In the tyres of "tubeless" type, an impermeable layer of elastomeric material, normally termed "liner", covers the inner surfaces of the tyre.

Following the building of the green tyre, actuated by means of assembly/building of the respective components, a moulding and vulcanisation treatment is executed aimed to determine the structural stabilisation of the tyre by means of crosslinking of the elastomeric compositions as well as, if required, to impart a desired tread design on the tyre and possible graphic marks at the sidewalls.

For such purpose, according to a type of moulding and vulcanisation method for a green tyre termed "with set pressure", the green tyre is introduced into a mould and pressed against the inner walls of said mould by means of an expandable chamber, also termed vulcanisation chamber.

The expandable chamber is placed inside the tyre itself and has, in proximity to each axial end, at least one circumferential edge bearing anchoring appendages to respective parts of the mould.

The expansion of the expandable chamber is obtained by means of introduction of a pressurised hot fluid (gas or steam) within the same, so as to bring said expandable chamber in contact with the inner surface of the green tyre and compress the latter against the walls of the moulding cavity, with simultaneous transmission of the heat required for crosslinking.

Upon completed vulcanisation, the expandable chamber is depressurised and the mould is opened, in order to allow the removal of the tyre and to arrange the mould at a new vulcanisation cycle.

Auxiliary components can be applied to the vulcanised tyre by making them adhere to the inner surface. Such auxiliary components are for example intended for monitoring the operating conditions of the tyre or for functions of self-sealing or absorption of the noise caused by rolling. In the patent application WO2013111073 on behalf of the Applicant, a method is described for installing a monitoring device in a tyre for vehicle wheels.

During the moulding and vulcanisation operation, a reciprocating movement frequently occurs of the outer contact surface of the expandable chamber and the radially inner surface of the impermeable elastomeric material layer of the green tyre, both during the chamber expansion phase and during the deflation and removal of the chamber from the tyre after the tyre has been moulded and vulcanised.

During the latter operation, the surface of the expandable chamber tends to remain attached to the radially inner surface of the impermeable elastomeric material layer. The separation of the two surfaces, actuated at the end of the vulcanisation cycle can cause local damage of the chamber and cause involve defectiveness in the tyre.

In order to overcome the drawbacks set forth above, it is known to use compositions having lubricating and releasing properties in the coating of vulcanisation chambers, as disclosed for example in US 7896633, US 4359340 and US 8101279.

Silicone contained in the lubricant composition present on the radially inner surface of the impermeable elastomeric material layer is a disturbance if it is desired to apply auxiliary components to the vulcanised tyre by making them adhere to the inner surface. Indeed, silicone does not allow an optimal adhesion of the auxiliary component, as is for example stated in the patent US 8151930.

It is therefore necessary, before applying the auxiliary component, to clean the radially inner surface of the impermeable elastomeric material layer - mechanically, by means of manual, or by means of laser, or chemically.

The chemical and/or physical/mechanical cleaning operations of the surfaces of the impermeable elastomeric material layer after vulcanisation can damage the integrity of the surface of the impermeable elastomeric material layer, in addition to increasing the production time and costs and the risk of introducing pollutant substances in the production cycle.

On the other hand, the use of glues with high adhesion directly on the lubricated surface, without previous cleaning treatment, apart from the cost and difficulty of use does not seem to ensure the repeatability and duration of the gluing.

The patent US 6494543 describes a method for obtaining a tyre in which at least one portion of the inner surface is pigmented with an inorganic fluorescent material.

The patent application US2004/103967 describes a tyre comprising a removable barrier film adherent to a selected portion of the outer or inner surface of the tyre, adapted to protect the same from the contamination due to the release agent during vulcanisation.

The patent application JP S56 162634 describes a device for applying a release agent on the inner surface of a tyre before the vulcanisation and a device for detecting the applied coating.

### SUMMARY OF THE INVENTION

In making tyres provided with auxiliary components adhered to the inner surface of the tyre, the Applicant had to address the need of ensuring relative sliding and separation of the surfaces in contact during moulding and vulcanisation, typically accomplished by lubricating the vulcanisation chamber and/or the inner surface of the tyre; the Applicant also addressed the need to maintain the tyre performances and the auxiliary component functionality unaltered over time.

The Applicant has observed that while a lubrication of the contact surfaces is opportune for preventing defectiveness in the tyre and for ensuring a certain duration of the vulcanisation chamber, an auxiliary component has a hard time being glued or maintained durably adhered on the inner surface of the tyre where such surface is polluted by the presence of lubricant.

The Applicant has observed that a separation of the auxiliary component, in addition to involving a partial or total reduction of its functionality, also leads to unbalancing during the rolling of the tyre, reducing the performances thereof.

In order to solve the problem of separation of the auxiliary components, the Applicant has comprehended that a durable adhesion would have been possible by arranging a chamber that is at least partially self-releasing so as to be able to minimise or prevent the deposition of lubricants and/or release agents in the tyre zones intended for the adhesion of the component and, subsequently, by verifying before the application that such zones actually lacked lubricating pollutants and/or release agents.

The Applicant has therefore found a treatment process aimed to circumscribe or better yet prevent the contamination of the areas affected by the adhesion, and which simultaneously allows, in case of accidental contaminations, highlighting the latter.

In particular, the Applicant has obtained a particularly advantageous process which provides for selectively treating, with a lubricant composition and/or release agent, the interior of the tyre and/or the exterior of the expandable vulcanisation chamber, in particular a process that contemplates the treatment - of the radially inner surface of the green tyres in a portion which, on the finished tyre, is not affected by the presence of the auxiliary component - with a lubricant composition and/or release agent comprising a highlightable material, and the subsequent verification of the substantial absence of such composition from the adhesion areas by means of detection of the presence of possible highlightable material.

The Applicant has found that the detection of the contaminated surfaces is not simple, however, since the uniform black colour of the tyre does not allow distinguishing the treated and/or contaminated parts with sufficient precision, by means of visual or instrumental control. Also the addition of coloured pigments to the treatment liquids does not allow an easy identification, due to the low contrast with the black surface of the tyre.

The Applicant has found that by using a fluorescent material incorporated in the lubricant composition, it is possible to detect the presence of the latter where present on the tyre surfaces.

The present invention refers, according to claim 1, to a process for producing tyres provided with auxiliary components, comprising:
a) forming a green tyre on a forming drum;
b) arranging an expandable vulcanisation chamber that is at least partially self-releasing;
c) shaping, moulding and vulcanising the green tyre by using said expandable chamber in a manner so as to obtain a finished tyre;
d) making an auxiliary component adhere on a first portion of a radially inner surface of the tyre;
wherein shaping, moulding and vulcanising the green tyre comprises:
c1) selecting at least one green tyre every n green tyres, where n is an integer;
c2) coating at least one second portion of the radially inner surface of said at least one selected green tyre with a composition A comprising A1) at least one release agent and/or lubricant and A2) at least one fluorescent material
   wherein said second portion on the green tyre corresponds with a portion on the finished tyre substantially not superimposed on said first portion;
c3) selecting at least one vulcanised tyre every m vulcanised tyres where m is an integer;
c4) verifying on said vulcanised tyre the possible presence of said composition A by means of detection of the fluorescent material on said first portion of radially inner surface of the tyre.

As used herein, the phrase "wherein said second portion on the green tyre corresponds with a portion on the finished tyre substantially not superimposed on said first portion" signifies that said second portion is superimposed for a % equal to or less than 1%, preferably 0.5%, still more preferably 0.05% or that it is not at all superimposed on said first portion. The Applicant has found that by operating in accordance with the process of the present invention, it is possible to arrange and control that the tyre surfaces on which the auxiliary components are glued are substantially free of treatment and/or contamination by said composition A.

The Applicant has assumed that an acceptable presence of lubricating substances and/or release agents on the inner surface of the tyre, for example equal to or less than 1%, preferably 0.5%, still more preferably 0.05% in the adhesion zone, was unable to bring about the separation of the auxiliary component, not even in the most severe use conditions.

The arrangement of treatments and the subsequent verification on the portions of inner surface of the tyre, on which the auxiliary components are affixed, allows preventing the application of the auxiliary components, by means of gluing, from being executed on a surface that would not allow effective adhesion.

Therefore, the detection of the surface parts substantially free of treatment and/or accidentally contaminated ensures that the adhesion of the sealing layers and/or of the auxiliary components is only executed on a surface that allows an effective adhesion, i.e. strong and durable; the production times and costs of tyres provided with such components are reduced, and the risk of separation of the auxiliary component with consequent malfunction during the use of the tyre is also reduced.

In accordance with the process of the present invention, c4) verifying on said vulcanised tyre the possible presence of said composition A by means of detection of the fluorescent material on said first portion of radially inner surface of the tyre, is carried out by illuminating the radially inner surface of the tyre by means of a light source for fluorescent materials preferably a UV lamp or Wood's lamp.

Optionally, c4) further comprises evaluating the extension and/or the position of said composition A on said first portion of radially inner surface of the tyre.

The light emitted by the fluorescent material present on the treated and/or accidentally contaminated surface parts clearly delineates such parts and hence makes them detectable, while it leaves the part free of treatment and/or not contaminated in the dark.

In this case, the problem of the contrast with the black surface of the tyre, which would be present if a coloured but not fluorescent pigment was added, is completely overcome.

If the presence of said composition A on said first portion of radially inner surface of the tyre is not verified, or if the possible presence is deemed acceptable, in accordance with one embodiment of the invention the process for producing tyres comprises, d) bringing the tyre to the subsequent step of application of the auxiliary component.

If said presence is not deemed acceptable, in accordance with another embodiment of the invention the process for producing tyres for vehicle wheels comprises, p) bringing the tyre to a step of cleaning.

The verification c4) of the possible presence of said composition A by means of detection of the fluorescent material on said first portion of radially inner surface of the tyre can be carried out on a tyre randomly selected from among the vulcanised tyres or on each tyre after vulcanisation.

In accordance with one embodiment of the process of the invention, the operation c4) is carried out by an operator who, by illuminating with a UV lamp the inner surface of the tyre, qualitatively and/or quantitatively detects for example by means of assistance of templates or patterns, the presence and/or the position and/or the extension of the fluorescent material on the first portion of said tyre, and decides if the tyre is to be sent to the subsequent step of application of the auxiliary component or to a cleaning operation.

Preferably, in order to increase precision and accuracy of the inspection, the productivity of tyres and in order to improve the performances and duration of the auxiliary components, the operation c4) is carried out with automated means.

In accordance with a preferred embodiment of the process of the invention, the operation c4) is carried out by means of an inspection apparatus comprising at least one UV lamp and at least one camera which cooperate in order to detect information regarding the possible presence and/or the extension and/or the position of the fluorescent material on the first portion of said tyre.

Preferably said at least one camera is arranged for processing and/or for sending the aforesaid information to a processing unit which can warn an operator in case of irregularity possibly encountered in the tyre and/or assign the tyre to the subsequent step of application of the auxiliary component or to a cleaning operation.

In accordance with one embodiment of the invention, c2) comprises coating zones of the radially inner surface of the impermeable elastomeric material layer placed at the beads and possibly at the sidewalls and edges and/or beyond the edges of said at least one selected green tyre.

Preferably c2) comprises coating zones of the radially inner surface of the impermeable elastomeric material layer except for the crown portion.

Preferably the integer n can for example be selected on the basis of the type of tyre to be treated and/or defined at the moment following the inspection carried out on one vulcanised tyre.

According to claim 18, the present invention relates to a tyre having an auxiliary component adhered on a first portion of its radially inner surface characterised in that it is coated, at least on a second portion of the radially inner surface different from the first portion, with a composition A comprising A1) at least one release agent and/or lubricant and A2 at least one fluorescent material.

With the expression "that is at least partially self-releasing" referred to the expandable vulcanisation chamber, it is intended that said chamber is *per se* anti-adherent, for example it is silicone-based, or it is pretreated in a permanent manner with a release agent that facilitates the separation from the green tyre at least in the zones corresponding to the first portion of radially inner surface of the tyre.

Such pretreatment of the expandable vulcanisation chamber comprises:
b1) coating the outer surface of said expandable vulcanisation chamber with a substantially crosslinkable composition B comprising B1 at least one release agent;
b2) crosslinking said substantially crosslinkable composition B on the expandable chamber;
b3) repeating at least once the aforesaid operations b1) and b2).

The substantially crosslinkable composition B comprises B1) at least one release agent, for example at least one reactive oil having OH groups, preferably said reactive oil is a reactive polysiloxane oil having OH groups, and
B2) at least one crosslinking agent comprising at least two functional groups capable of reacting with B1).

With the expression "fluorescent material" it is intended a substance capable of re-emitting the received electromagnetic radiation, in particular of absorbing radiation in the ultraviolet and emitting it in the visible.

With the expression "reactive oil" or "reactive polysiloxane oil" it is respectively intended an oil or a silicone oil, or a polysiloxane that in use conditions chemically reacts with at least one other constituent of the composition.

With the commonly-used term "silicone", or the more correct term "polysiloxane", inorganic polymers based on a silicon-oxygen chain and organic functional groups R bonded to the silicon atoms are identified.

With the expression "non-reactive oil" or "non-reactive polysiloxane oil" it is respectively intended an oil or a silicone oil or a polysiloxane that in the preparation and use conditions substantially does not chemically react with the constituents of the polysiloxane composition.

With the term "solvent" it is intended a component capable for example of dissolving, and/or dispersing, and/or emulsifying, and/or diluting the components of the composition A or B.

With the expression "volatile phase" it is intended a phase mainly constituted by solvent, and comprising possibly other volatile components such as reactive and non-reactive polysiloxanes, or products of degradation and/or crosslinking.

The present invention can have at least one of the following preferred characteristics, taken separately or in combination with the others.

Preferably c2) coating predefined portions of the radially inner surface of the impermeable elastomeric material layer of said at least one selected green tyre with a composition A is carried out in the zones placed at the beads, more preferably also in the zones placed at the sidewalls, still more preferably also in the zones placed at the edges of the tyre and/or beyond the edges at part of the crown portion of the tyre, in any case leaving free of treatment the zone in which the auxiliary component will be made to adhere.

Preferably c2) is carried out in a manner so to leave non-coated at least 80%, more preferably 100% of the radially inner surface of the impermeable elastomeric material layer at the crown portion of the green tyre.

Preferably c2) is carried out on one green tyre every n tyres of the production cycle, n being an integer equal to or less than 60, preferably comprised between 5 and 50, more preferably it occurs with a frequency not less than 1 green tyre every 24 (n=24), still more preferably with a frequency not less than 1 green tyre every 12 (n=12), still more preferably with a frequency not less than 1 green tyre every 6 (n=6).

The coating of the tyre can be applied to all the green tyres, in this case the coating is considered with a frequency of 1 green tyre every tyre (n=1).

Preferably, between 1 g/m² and 15 g/m², more preferably between 4 g/m² and 12 g/m² of composition A are applied per single green tyre, said composition also comprising the solvent in a quantity equal to at least 50% by weight, preferably to at least 60% by weight, more preferably to at least 75% by weight with respect to the total weight of the composition itself.

According to the Applicant, coating predefined portions of the radially inner surface of the impermeable elastomeric material layer with the composition A optimises the transfer of the lubricant from the treated tyre to the expandable chamber and in the subsequent vulcanisations from the chamber to the tyres, without polluting the radially inner surfaces of the tyre intended for the adhesion of the auxiliary components.

The composition A comprises A2) at least one fluorescent material selected from among fluorescent dyes or pigments, both organic and inorganic. Soluble fluorescent dyes have also proven suitable for such purpose, such as sulfonated derivatives which do not chemically interact with the aqueous emulsion and, in the indicated concentration, produce a stable emulsion.

In addition, it should be observed that even if the dispersion of the dye in the silicone phase that covers the surface of the tyre was not uniform, the presence of the dye would still be detectable.

Therefore, also insoluble fluorescent dyes or fluorescent pigments have proven useful for such purpose, even if dispersed in a non-uniform manner in the aqueous emulsion.

Preferably such fluorescent materials are organic.

Such materials belong to the group selected from among, but not limited to, stilbenes, such as stilbene-triazines and stilbene-naphthalene-triazoles, optionally sulfonated; coumarins and aminocoumarins; imidazolines, diazoles, triazoles, pyrazoles, pyrazolines, benzoxazoles and benzoxazolines, biphenylstilbenes, phenylethylenes, benzimidazoles, ethyleneureas, naphthalimides, xanthenes and thiophene-benzoxazoles. Preferred examples of fluorescent materials are the soluble fluorescent materials termed Fluorescent Brightener marked with the Colour Index (CI) number from 1 to 396, for example Fluorescent Brightener CI 1 (stilbene-triazine derivative - CAS Registry Number 15339-39-6), CI 40 (stilbene-naphthalene-triazole derivative - CAS Registry Number 7426-67-7), CI 45 (benzimidazole derivative - CAS Registry Number CAS Registry Number 61902-20-3), CI 48 (ethyleneurea derivative - CAS Registry Number 6826-44-4), CI 52 (aminocoumarin derivative - CAS Registry Number 12224-03-2), CI 155 (xanthene derivative - CAS Registry Number 6250-49-3), CI 162 (naphthalimide derivative - CAS Registry Number 12224-26-9), CI 181 (benzoxazole derivative - CAS Registry Number 12224-37-2), CI 220 (stilbene-triazine derivative - CAS Registry Numbers 16470-24-9/49549-42-5), CI 236 (coumarin-triazole derivative - CAS Registry Number 3333-62-8), CI 357 (stilbene-triazine derivative - CAS Registry Numbers 41098-56-0/ 83512-97-4) and CI 367(benzoxazole derivative - CAS Registry Numbers 63310-10-1/5089-22-5).

Examples of further preferred fluorescent materials belong to the class of stilbenes, in particular of the sulfonated stilbene-triazines.

Still more preferably the fluorescent material is

Fluorescent Brightener 357, Cas Registry Numbers 41098-56-0/83512-97-4 having the following formula: 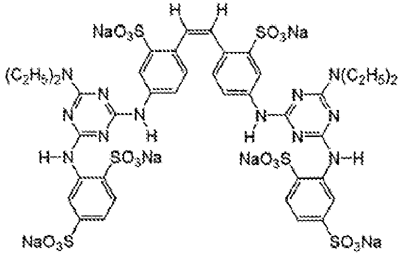 or
Fluorescent Brightener 220 (Cas Registry number 16470-24-9/49549-42-9) having the following formula:

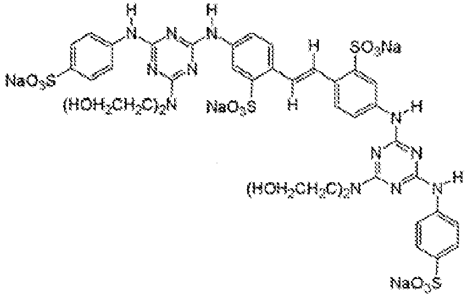

Examples of inorganic fluorescent materials are prepared from oxides, sulfides, silicates, tungstates and chlorates of metals such as zinc, cadmium, calcium, aluminium or yttrium with high purity as main ingredient, adding small quantities of an activating agent such as manganese, silver, copper, lead and europium and synthesizing them at high temperature.

The metal sulfides can for example include CaS and ZnS, metal oxides can for example include ZnO and Y₂O₃ and metal chlorates can for example include CaWO₄, MgWO₄, Zn₂SiO₄ and BaSi₂O₅.

Examples of preferred inorganic fluorescent materials on their own, or in a mixture of two or more, are light-accumulating fluorescent materials such as for example zinc sulfide - based fluorescent materials (ZnS:Cu; ZnS:Cu, Co; CaS:Eu, Tm; and CaS:Bi), and earth alkaline aluminate - based fluorescent materials (SrAl₂O₄: Eu; Al₂O₄: Eu, Dy; Sr₄Al₁₄O₂₅ : Eu, Dy; CaAl₂O₄: Eu, Nd). Preferably the concentration of the fluorescent material in the composition A is comprised between 0.001 and 5 g/l, between 0.005 and 1 g/l; still more preferably it is comprised between 0.05 and 0.5 g/l, still more preferably it is between 0.09 and 0.15, more preferably around 0.1 g/l.

The composition A comprises A1) at least one release agent and/or lubricant selected from among, but not limited to, ethoxylated alcohols such as C9-11 ethoxylated alkyl alcohol (CAS RN 68439-46-3; ML-7032, ChemTrend Corp.) and non-reactive polysiloxane oils.

Preferably the composition A is a polysiloxane composition that is substantially non-crosslinkable comprising A1) at least one release agent and/or lubricant selected from among A1a) non-reactive polysiloxane oils.

Preferably the polysiloxane composition A has a solid residue, as defined above, comprised between 15% and 35%.

Preferably the polysiloxane composition A that is substantially non-crosslinkable comprises
A1a) at least one non-reactive polysiloxane oil,
A2) at least one fluorescent material; and optionally
A1b) at least one reactive polysiloxane oil having OH groups.

Preferably said polysiloxane composition A comprises:
A1c) at least one crosslinking agent comprising at least two functional groups capable of reacting with the reactive polysiloxane oil A1b);

Preferably the ratio by weight between the non-reactive polysiloxane oil A1a) and the reactive polysiloxane oil A1b), is at least 1, preferably comprised between 1.5 and 10.

Preferably said polysiloxane composition A that is substantially non-crosslinkable comprises:
A1d) a crosslinking catalyst.

Preferably said polysiloxane composition A that is substantially non-crosslinkable comprises:
A1e) at least one polysiloxane resin having condensable hydroxyl groups and siloxane units.

Preferably said polysiloxane composition A that is substantially non-crosslinkable comprises:
A1f) at least one solvent.

In the polysiloxane composition A that is substantially non-crosslinkable, the organic substituents bonded to the silicon atom of the non-reactive polysiloxane oil A1a) are independently selected from among C₁-C₆ linear or branched alkyl, C₃-C₈ cycloalkyl, C₂-C₈ linear or branched alkenyl, C₆-C₁₀ aryl, C₆-C₁₅ alkylarylene and C₆-C₁₅ arylalkylene, more preferably from among C₁-C₆ alkyl, C₆-C₁₅ alkylarylene and C₆-C₁₅ arylalkylene.

In the polysiloxane composition A that is substantially non-crosslinkable, preferably the molecular weight of the non-reactive polysiloxane oil A1a) is greater than 590 dalton, preferably it is greater than 1000 dalton.

Preferably in the polysiloxane composition A that is substantially non-crosslinkable, the organic substituents bonded to the silicon atom of the reactive oil A1b) are independently selected from among C₁-C₆ linear or branched alkyl, C₃-C₈ cycloalkyl, C₂-C₈ linear or branched alkenyl, C₅-C₈ cycloalkenyl, optionally substituted with hydroxyl, and/or amino optionally substituted with alkyl, alkenyl or cycloalkyl, and/or halogen, and/or cyan, still more preferably, they are independently C₁-C₆ linear or branched alkyl.

In the polysiloxane composition A that is substantially non-crosslinkable, preferably the molecular weight of the reactive polysiloxane oil A1b) is greater than 590 dalton, preferably it is greater than 1000 dalton.

In the polysiloxane composition A that is substantially non-crosslinkable, the crosslinking agent A1c) is preferably an organotrialkoxysilane, an organotriacyloxysilane, an organotrioxymosilane or an tetralkyl silicate; more preferably such crosslinking agent A1c) is methyltrimethoxysilane, methyltriethoxysilane, ethyltriethoxysilane or vinyltrimethoxysilane, still more preferably it is methyltriethoxysilane.

The polysiloxane composition A that is substantially non-crosslinkable can contain a second crosslinking agent A1c) having Si-H functional groups, for example methylhydrogenosilane, dimethylhydrogenosilane and polymethylhydrogenosilane.

Preferably the polysiloxane composition A that is substantially non-crosslinkable comprises:
at least two different crosslinking agents A1c) comprising at least two functional groups capable of reacting with the reactive polysiloxane oil A1b); still more preferably said different crosslinking agents A1c) are methyltriethoxysilane and polymethylhydrogenosilane. Preferably, the polysiloxane composition A that is substantially non-crosslinkable contains a second crosslinking agent A1c) having Si-H functional groups, for example methylhydrogenosilane, dimethylhydrogenosilane and polymethylhydrogenosilane.

In the polysiloxane composition A that is substantially non-crosslinkable, the condensation catalyst A1d) is an organometallic compound, more preferably an organometallic compound of titanium, of zirconium or of tin, more preferably of tin (Sn), still more preferably such catalyst is octyl diacetate, octyl dihexanoate or octyltin dilaurate.

In the polysiloxane composition A that is substantially non-crosslinkable, the organic substituents of the resin A1e), are independently C₁-C₆ linear or branched alkyl, C₂-C₈ linear or branched alkenyl, C₃-C₈ cycloalkyl and C₅-C₈ cycloalkenyl, optionally substituted with a group selected from among -OR', - O-CO-R', an amino group, an amide group, an epoxy group and a ureide group, where R' is selected from among C₁-C₆ linear or branched alkyl, C₂-C₈ linear or branched alkenyl, C₃-C₈ cycloalkyl and non-substituted cycloalkenyl C₅-C₈.

In the polysiloxane composition A that is substantially non-crosslinkable, the solvent A1f) is preferably water.

Preferably the volatile phase of the polysiloxane composition A that is substantially non-crosslinkable is constituted by water.

Preferably the polysiloxane composition A that is substantially non-crosslinkable contains non-reactive polysiloxane oil A1a) in a quantity greater than the 10%, more preferably greater than the 50% by weight with respect to the total composition.

Preferably in step d), the auxiliary component is a sound-absorbent polymer foam for reducing the transmission of the noise of the tyre and/or a monitoring device and/or a sealing complex.

### BRIEF DESCRIPTION OF THE DRAWINGS

Further characteristics and advantages will be clearer from the detailed description of a preferred but not exclusive embodiment of a moulding and vulcanisation apparatus for tyres for vehicle wheels.

Such description is set forth hereinbelow with reference to the enclosed drawings, provided only as a non-limiting example, in which:
- figure 1 schematically shows, in cross section, a vulcanisation mould in an initial step of a moulding and vulcanisation process;
- figure 2 schematically shows, in radial half-section, a tyre for vehicle wheels;
- figures 3 and 4 show tyres bearing different auxiliary components.

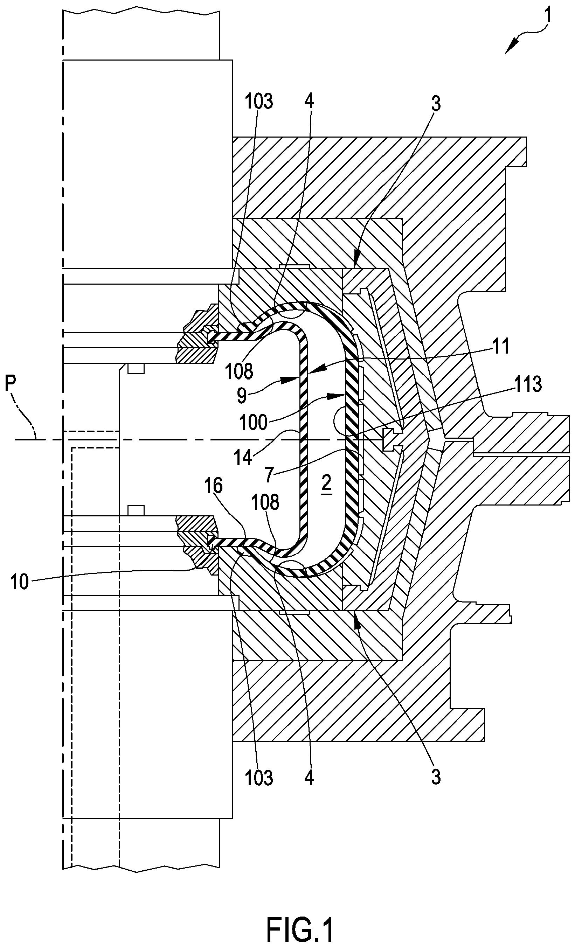

With reference to figure 1, reference number 1 overall indicates a vulcanisation mould belonging to a tyre building plant.

The vulcanisation and moulding process is executed by introducing the green tyre 100, coated according to the process of the present invention, within a moulding cavity 2 of the vulcanisation mould 1, said cavity 2 having a shape corresponding to the outer shape to be conferred to the tyre 100 once moulded and vulcanised.

The green tyre 100, once closed in the mould 1, is pressed against the containment walls which have suitable reliefs for determining the formation of a specific tread design.

Subsequently or simultaneously with the pressing step, heat is administered to the green tyre 1 so as to determine the crosslinking of the elastomeric material, of which the tyre itself is composed.

As is visible in figure 1, the mould 1 has a pair of shells 3 that are axially opposite and mutually couplable at an equatorial plane P. Each of the shells 3 comprises a work surface 4 arranged to operate on beads 103 and on sidewalls 108 of the green tyre 1.

The mutually-adjacent shells 3 on the abovementioned equatorial plane P also define a circumferential surface 7 arranged to operate against the tread band of the green tyre 100 to be vulcanised.

The green tyre 100, once closed in the mould 1, is pressed against the containment walls due to an expandable vulcanisation chamber 9.

The expandable vulcanisation chamber 9 has two radially inner circumferential edges bearing respective anchoring appendages 10, sealingly engageable in the mould 1, in order to operatively associate the expandable chamber 9 with the same mould 1.

The anchoring appendages 10 are connected to the mould 1 at more internal anchoring zones of the surfaces of the shells 3 that receive the beads of the green tyre 100.

A supply duct for steam, or another operating fluid, obtained in the mould 1 leads into the expandable chamber 9, so as to allow the expansion of the latter following the introduction of pressurised steam, in order to compress the green tyre 100 against the containment walls of the mould 1.

Such compression preferably occurs in a manner such that the radially outer surface 11 of the expandable chamber 9 approaches and contacts the radially inner surface 112 of the green tyre 100, according to a specific approach sequence.

Preferably, on the inner surface 14 of the expandable chamber 9, a first plurality of grooves 16 is made on at least one portion of said expandable chamber 9.

Preferably said first plurality of grooves 16 is obtained according to trajectories that are substantially parallel to each other.

The lubrication of one tyre every n tyres to be subjected to a moulding and vulcanisation is selectively carried out only in the portions not affected by the subsequent adhesion of the auxiliary components.

Preferably the auxiliary component is fixed to the impermeable elastomeric material layer in the crown portion, axially occupying different crown portions which can engage relatively small surfaces, of only a few cm², such as in the case of monitoring devices, or the entire crown portion and possibly also the sidewalls as in the case of a sealing complex, for example. Consequently, the coating of the second portions of the radially inner surface 113 of the impermeable elastomeric material layer of said at least one selected green tyre with a polysiloxane composition A that is substantially non-crosslinkable is carried out in a manner so as to not coat the radially inner surface of the impermeable elastomeric material layer corresponding to part or all of the crown portion.

Preferably the coating is carried out in the zones placed at the beads, more preferably also in the zones placed at the sidewalls, still more preferably also in the zones placed at the edges of the tyre and/or beyond the edges at part of the crown portion of the tyre, in any case leaving free of treatment the portion of impermeable elastomeric material layer on which the auxiliary component is then made to adhere in the finished tyre.

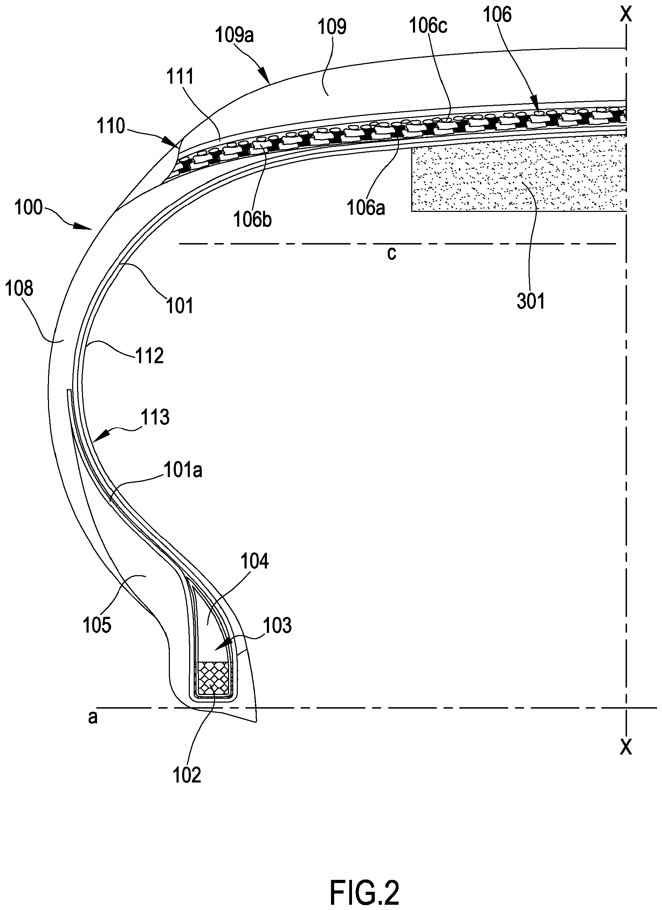

At the end of the moulding and vulcanisation process, a finished tyre is obtained like that shown in the radial half-section of figure 2.

In figure 2, "a" indicates an axial direction and "X" indicates a radial direction, in particular with X-X the line of the equatorial plane is indicated.

The tyre 100 for four-wheel vehicles comprises at least one carcass structure, comprising at least one carcass layer 101 having respectively opposite end flaps engaged with respective anchoring annular structures 102, termed bead cores, possibly associated with a bead filler 104. The zone of the tyre comprising the bead core 102 and the filler 104 forms a bead structure 103 intended for anchoring the tyre on a corresponding mounting rim, not illustrated.

The carcass structure is usually of radial type, i.e. the reinforcement elements of the at least one carcass layer 101 are situated on planes comprising the rotation axis of the tyre and substantially perpendicular to the equatorial plane of the tyre. Said reinforcement elements are generally constituted by textile cords, for example rayon, nylon, polyester, for example polyethylene terephthalate (PET) or polyethylene naphthalate (PEN). Each bead structure is associated with the carcass structure by means of backward folding of the opposite lateral edges of the at least one carcass layer 101 around the anchoring annular structure 102 in a manner so as to form the so-called turn-ups of the carcass 101a as illustrated in figure 2.

In one embodiment, the coupling between the carcass structure and the bead structure can be provided by means of a second carcass layer (not shown in figure 2) applied in an axially outer position with respect to the first carcass layer.

An anti-abrasive strip 105 made with elastomeric material is arranged in an outer position of each bead structure 103.

The carcass structure is associated with a belt structure 106 comprising one or more belt layers 106a, 106b situated in radial superimposition with respect to each other and with respect to the carcass layer, having typically textile and/or metallic reinforcement cords incorporated in a layer of elastomeric material.

Such reinforcement cords can have cross orientation with respect to a circumferential extension direction of the tyre 100. By "circumferential" direction it is intended a direction generically directed according to the rotation direction of the tyre.

In a radially more external position with respect to the belt layers 106a, 106b, at least one circumferential reinforcement layer 106c is applied, commonly known as "belt 0°", comprising at least one circumferential belt layer.

The reinforcement layer (circumferential belt) can comprise a plurality of typically textile and/or metallic cords.

In a radially outer position with respect to the belt structure 106, a tread band 109 made of elastomeric compound is applied, like other constituent semi-finished products of the tyre 100.

Respective sidewalls 108 made of elastomeric compound are also applied in axially outer position on the lateral surfaces of the carcass structure, each extended from one of the lateral edges 110 of the tread 109 up to the respective bead structure 103. The tyre portion comprised between the edges 110 identifies the crown C of the tyre. At such crown C, hence up to the edges 110 in radially inner position with respect to the tread, the belt structure 106 is preferably extended.

In radially outer position, the tread band 109 has a rolling surface 109a intended to come into contact with the ground. Circumferential grooves, which are connected by transverse notches (not shown in figure 2) in a manner so as to define a plurality of blocks of various shape and size distributed on the rolling surface 109a, are generally made in this surface 109a, which for the sake of simplicity in figure 2 is represented smooth.

An underlayer 111 can be arranged between the belt structure 106 and the tread band 109.

A layer of impermeable elastomeric material 112, generally known as "liner", provides the necessary impermeability to the tyre inflation air, and is typically arranged in a radially inner position with respect to the carcass layer 101.

At least one auxiliary component can be adhered, e.g. by means of gluing, to the radially inner surface 113 of the impermeable elastomeric material layer 112. Such auxiliary component is for example selected from among a sound-absorbent layer comprising for example a polymer foam for reducing the transmission of the noise of the tyre and/or a monitoring device such as a temperature and/or pressure sensor, and/or a sealing complex, and/or a label.

The additional component can be made to adhere to the radially inner surface 113 of the impermeable elastomeric material layer by means of gluing with suitable adhesives, such as an acrylic adhesive, or by exploiting the adhesive characteristics of the material itself as in the case of the sealing material.

With reference to figure 2, a tyre 100 is shown in radial section, bearing as first auxiliary component embodiment a sound-absorbent layer 301, for example made of expanded polymer material or polymer foam. The sound-absorbent layer 301 is made integral with the radially inner surface 113 of the impermeable elastomeric material layer 112 in the crown portion C by means of gluing, occupying in axial extension a part of said crown portion previously left free of the coating made with the polysiloxane composition A that is substantially non-crosslinkable since it is not coated directly or by means of transfer of said composition from the expandable chamber to the vulcanised tyres following that treated.

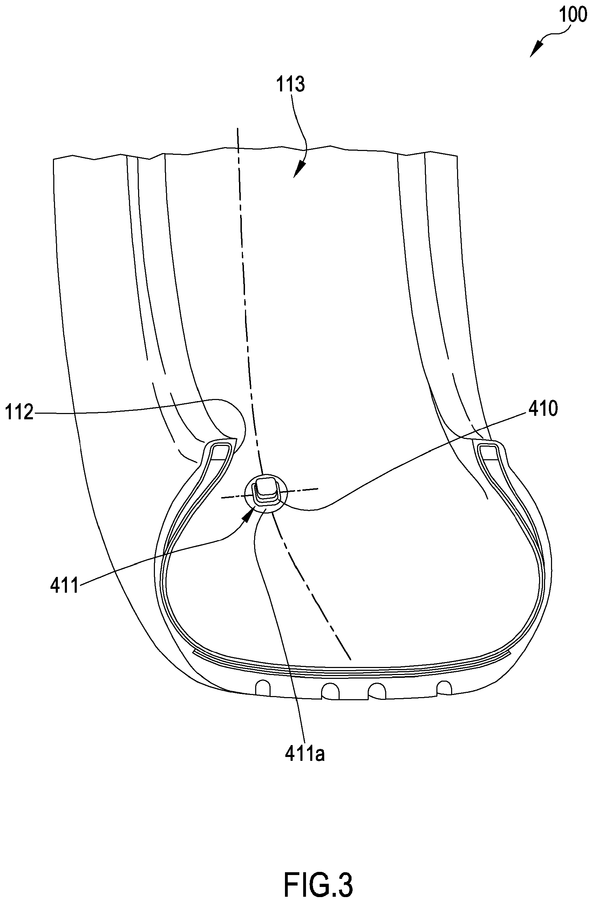

In figure 3, a perspective view is shown of a tyre bearing, as second auxiliary component embodiment, a monitoring device 410 adhered to the radially inner surface 113 of the impermeable elastomeric material layer in one zone of the crown portion C.

The monitoring device 410 comprises a housing 411 bearing one or more electronic devices, such as a temperature and/or pressure sensor, or an accelerometer or inertial sensor.

The housing 411 is provided with a base 411a intended for fixing to the liner of the tyre, for example by means of gluing. Preferably the housing is made of elastomeric material and/or thermoplastic material sufficiently elastic to support deformations and forces to which the device is subjected during the rolling of the tyre.

According to that illustrated in figure 3, the device is fixed to the radially inner surface 113 of the impermeable elastomeric material layer 112, preferably in proximity of the equatorial plane of the tyre, hence requiring the crown portion to be free of treatment with the polysiloxane composition A that is substantially non-crosslinkable. Nevertheless, other placements of the monitoring device are possible, and consequently other portions of the radially inner surface 113 of the impermeable elastomeric material layer 112 must previously be left free of treatment.

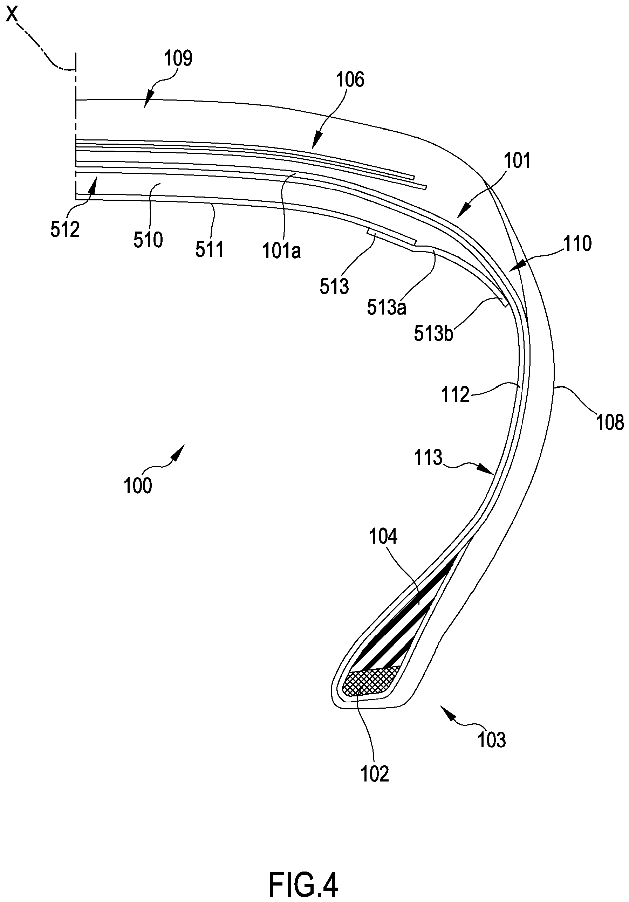

With reference to figure 4, a self-sealing tyre 100 is shown in radial half-section, comprising, as third auxiliary component embodiment, a sealing complex 512 comprising a layer of sealing polymer material 510 arranged at the crown portion of the tyre 100, preferably axially extended to the edges 110, in radially inner position with respect to the liner 112. The polymer material sealing layer 510 is extended for the entire circumferential extension of the tyre 100.

In radially inner position with respect to the layer of sealing polymer material 510 and in direct contact with said layer of sealing polymer material 510, a self-supporting elastomeric film 511 can be arranged that is made of thermoplastic polymer or elastomeric-thermoplastic polymer.

The tyre 100 can also preferably comprise two elongated elements made of elastomeric material 513, each arranged at a circumferential edge of the sealing complex 12. An axially inner portion 513a of each elongated element made of elastomeric material 513 is preferably superimposed on the sealing complex 512 and is arranged in radially inner position with respect to said sealing complex 512. An axially outer portion 513b of each elongated element made of elastomeric material 513 lies in direct contact with the radially inner surface 113 of the impermeable elastomeric material layer 112. By axially inner portion 513a it is intended a portion closer to an equatorial plane "X" of the tyre 100 than the axially outer portion 513b.

The sealing complex can be at least partially applied after vulcanisation and is made integral with the radially inner surface 113 of the impermeable elastomeric material layer 112 by means of gluing, for example by using the sealing polymer material 510 itself and a specific glue for the zones of the elongated elements 513.

The self-supporting elastomeric film 511 and/or the elongated elements made of elastomeric material 513 do not have to be present.

If the sealing complex comprises a protective layer, also in radially outer position with respect to the sealing material, it is this protective layer (not shown) to be glued to the radially inner surface 113 of the impermeable elastomeric material layer 112 together with the elongated elements 513. The radially inner surface of the impermeable elastomeric material layer at the crown portion and possibly at the edges of the tyre is previously left free of treatment with the substantially non-crosslinkable polysiloxane composition A.

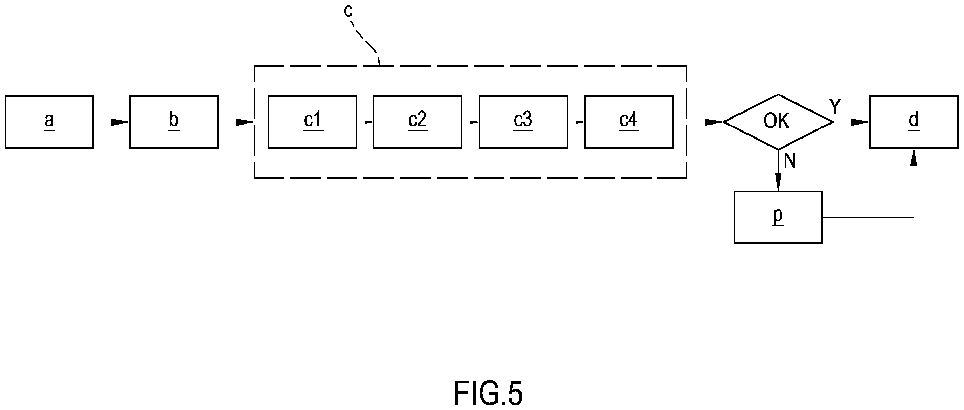

With reference to figure 5, a block diagram is described representing the steps of the process, object of the invention, where a) represents forming a green tyre on a forming drum; b) represents arranging an expandable vulcanisation chamber;
c) represents shaping, moulding and vulcanising the green tyre in a manner so as to obtain a finished tyre; wherein c1) represents selecting at least one green tyre every n green tyres, where n is an integer; c2) represents coating at least one second portion of the radially inner surface of said at least one selected green tyre with a polysiloxane composition A that is substantially non-crosslinkable comprising A1) at least one release agent and/or lubricant and A2) at least one fluorescent material, wherein said second portion on the green tyre corresponds with a portion on the finished tyre substantially not superimposed on said first portion; c3) represents selecting at least one vulcanised tyre every m vulcanised tyres and c4) represents verifying, on said vulcanised tyre, the possible presence of said composition A by means of detection of the fluorescent material on said first portion of radially inner surface of the tyre;
following the verification that is obtained in c4), a decision-making step (OK) is provided if the verification has given favourable outcome (Y) - in the sense that fluorescent material was not detected on said first portion of radially inner surface of the tyre - the tyre can be sent to the subsequent step of application of the auxiliary component; in the opposite case (N), the tyre can be subjected to a cleaning step before recommencing the normal production cycle and passing to the application of the auxiliary component; d) represents making an auxiliary component adhere on a first portion of a radially inner surface of the tyre;
p) represents sending the tyre to a cleaning step.

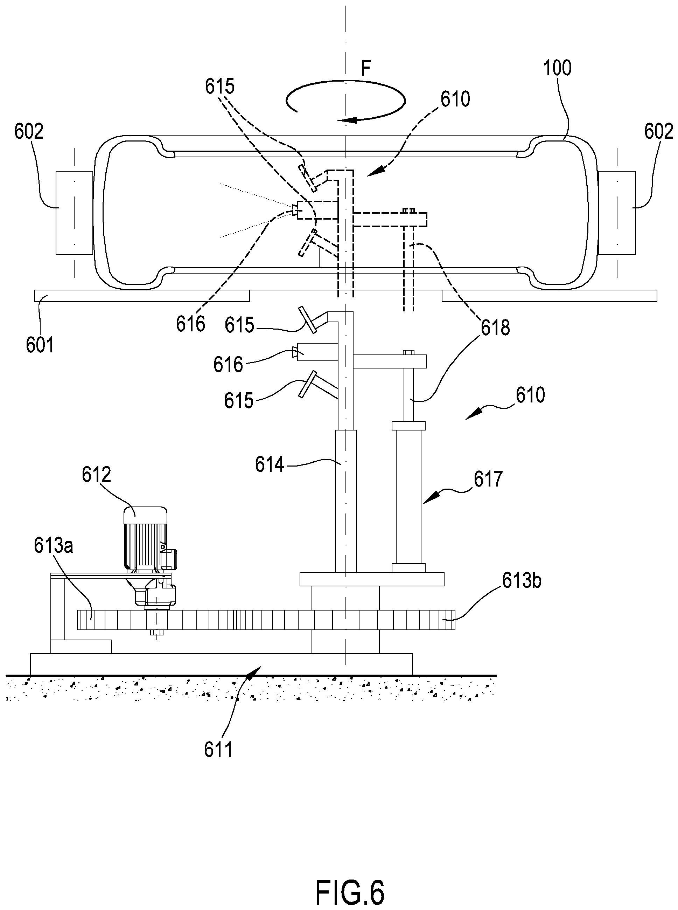

With reference to figure 6, an apparatus 610 is shown for inspecting the tyres destined, after vulcanisation, for the application of an auxiliary component, for example a sound-absorbent polymer foam for reducing the transmission of the noise of the tyre and/or a monitoring device and/or a sealing complex.

A translated tyre 100, abutted against a sidewall, is maintained in predefined position along a transfer plane 601 for the inspection by a centring system schematised with the blocks 602.

The inspection apparatus 610 comprising an inspection head comprising a camera 616 and at least one UV lamp 615, preferably two lamps as in the shown embodiment, integrally installed.

The inspection can be carried out by positioning the inspection head inside the tyre from the top or bottom with respect to the transfer plane, substantially coaxial with the rotation axis of the tyre with the camera 616 and the at least one lamp 615 oriented towards the inner portion to be inspected of the tyre.

A relative rotation of the tyre and/or of the inspection apparatus for at least one complete revolution or for an angular sector that can be predetermined as a function of application of the component, allows the detection of the possible presence of composition A in the first portion of radially inner surface of the tyre.

In one embodiment which provides for the rotation (e.g. 360°), schematised with the arrow F, of the inspection apparatus 610, the latter comprises a base 611 bearing a motorization 612 supported by a first disc 613a provided with toothing adapted to be meshed with a corresponding toothing of a second disc 613b bearing an arm 614 in turn bearing the inspection head. The preferably extensible arm 614 can be elongated due to a fluid-dynamic system schematised with 617 such that it can be moved from the bottom to the interior of the tyre 100 to be inspected through an opening present in the transfer plane 601.

The camera 616 is preferably arranged for analysing the surface, detecting the data useful for verifying the presence of composition A, for example the total area thereof, the area and the position of the possible fluorescent material present. The information detected by the inspection apparatus can be sent to a processing unit which can provide a response and/or assign the tyre to the suitable subsequent step.

It is also possible to proceed with a visual inspection of the tyre by an operator who, by illuminating with a UV lamp the inner surface of the tyre, sees the possible presence of fluorescent material on the first portion and defines - on the basis of the presence and/or position and/or extension of the detected fluorescent material - if the tyre is to be sent to the subsequent step or to a cleaning operation.

### TESTS

The polysiloxane composition A was prepared by diluting Fluorescent Brightener 357 (Cas Registry Numbers 41098-56-0/83512-97-4; in Mono-Lube® 8186 (ChemTrend Corp.) until a concentration at least of 0.1 g/l is obtained.

One green tyre every six has been treated on the radially inner surface of the impermeable elastomeric material layer at the beads and sidewalls, except for the crown portion, with such polysiloxane composition A that is substantially non-crosslinkable.

Before being vulcanised, the green tyre was left at ambient temperature until total evaporation of the water has occurred, then the normal vulcanisation of the tyres took place.

The interior of the tyre was subjected to UV illuminator with LED provided by the RODER model PL-DL1-025200-ULV-B00000 and Keyence IV-500CA camera in order to detect if, in the vulcanised tyre, the zone not treated with the non-crosslinkable polysiloxane composition A, i.e. crown portion, was contaminated or not.

The sensitivity of detection of the system was calibrated in order to identify a stain with minimum surface area of 100 mm².

Such calibration has been deemed sufficient for obtaining a durable and resistant adhesion even with an extreme use of the tyre, if the auxiliary component was a sound-absorbent layer.

For other auxiliary components, the calibration could be less than or greater than 100 mm², respectively as a function of the smaller or greater total extension of the first inner surface portion.

In the conducted test, the inspection head was regulated for irradiating a rectangular area extended in the axial direction of the tyre for the entire crown portion.

The camera was connected to a processing unit capable of autonomously managing the detected irregularities by sending an alarm signal and/or by assigning a cleaning step to the tyre in which the irregularity was detected.

The type of set control operated by detecting the area extension of the fluorescent material stain possibly present in the inspection area.

A reference image was detected of the inner surface of a clean tyre and/or tyre lacking stains, of the same measure as the tyres to be subjected to inspection.

The surface portion to be subjected to inspection was defined.

During the rotation of the inspection head, every single photogram taken by the camera was compared with the reference image and the possible and extension of fluorescent material was detected.

In case of presence of detected fluorescent material, if the area of fluorescent material was greater than a predefined absolute value or percentage, the tyre was reported and sent to a cleaning operation

If the zone to be glued was found to be uncontaminated by the fluorescent material, the gluing of the sound-absorbent sponge is then carried out.

## Claims

1. Process for producing tyres provided with auxiliary components, comprising:
a) forming a green tyre (100) on a forming drum;
b) arranging an expandable vulcanisation chamber (9) that is at least partially self-releasing;
c) shaping, moulding and vulcanising the green tyre (100) by using said expandable vulcanisation chamber (9) in a manner so as to obtain a finished tyre;
d) making an auxiliary component (301, 410, 512) adhere on a first portion of a radially inner surface (113) of the tyre;
wherein shaping, moulding and vulcanising the green tyre (100) comprises:
c1) selecting at least one green tyre (100) every n green tyres (100), where n is an integer;
c2) coating at least one second portion of the radially inner surface (113) of said at least one selected green tyre (100) with a composition A comprising A1 at least one release agent and/or lubricant and A2 at least one fluorescent material;
wherein said second portion on the green tyre corresponds with a portion on the finished tyre not superimposed on said first portion;
c3) selecting at least one vulcanised tyre every m vulcanised tyres, where m is an integer;
c4) verifying, on said vulcanised tyre, the possible presence of said composition A by means of detection of the fluorescent material on said first portion of radially inner surface (113) of the tyre.

2. Process as claimed in claim 1 wherein the detection of the fluorescent material on said first portion of radially inner surface (113) of the tyre is carried out by illuminating the radially inner surface (113) of the tyre by means of a light source for fluorescent materials, preferably a UV lamp (615) or Wood's lamp.

3. Process as claimed in claim 1 or 2 wherein c4) further comprises evaluating the extension and/or the position of said composition A on said first portion of radially inner surface (113) of the tyre.

4. Process as claimed in any one preceding claim wherein c4) is carried out on a tyre randomly selected from among the vulcanised tyres or on each tyre after vulcanisation.

5. Process as claimed in any one preceding claim wherein c4) is carried out by an operator who qualitatively and/or quantitatively verifies the presence and/or the position and/or the extension of the fluorescent material on the first portion of said tyre, and decides if the tyre is to be sent to the subsequent step of application of the auxiliary component (301, 410, 512) or to a cleaning operation.

6. Process as claimed in any one claim from 1 to 4 wherein c4) is carried out by means of an inspection apparatus comprising at least one UV lamp (615) and at least one camera (616) which cooperate in order to detect information regarding the possible presence and/or extension and/or position of the fluorescent material on the first portion of said tyre.

7. Process as claimed in claim 6 wherein said at least one camera (616) of the inspection apparatus (610) is arranged for processing and/or for sending the information to a processing unit which can warn an operator in case of irregularity possibly encountered in the tyre and/or assign the tyre to the subsequent step of application of the auxiliary component (301, 410, 512) or to a cleaning operation.

8. Process as claimed in any one preceding claim wherein c2) comprises coating zones of the radially inner surface (113) of the impermeable elastomeric material layer (112) placed at the beads (103) and possibly at the sidewalls (108) and edges (110) and/or beyond the edges (110) of said at least one selected green tyre.

9. Process as claimed in any one preceding claim wherein c2) comprises coating zones of the radially inner surface (113) of the impermeable elastomeric material layer (112), except for the crown portion (C).

10. Process as claimed in any one preceding claim wherein said fluorescent material A2) is selected from among fluorescent dyes or pigments, both organic and inorganic.

11. Process as claimed in any one preceding claim wherein the fluorescent material A2) is organic.

12. Process as claimed in any one preceding claim wherein the fluorescent material A2) belongs to the group selected from among, but not limited to, stilbenes, such as stilbene-triazines and stilbene-naphthalene-triazoles, optionally sulfonated; coumarins and aminocoumarins; imidazolines, diazoles, triazoles, pyrazoles, pyrazolines, benzoxazoles and benzoxazolines, biphenylstilbenes, phenylethylenes, benzimidazoles, ethyleneureas, naphthalimides, xanthenes and thiophene-benzoxazoles.

13. Process as claimed in any one preceding claim wherein the fluorescent material A2) is selected from among soluble fluorescent materials termed Fluorescent Brightener marked with the Colour Index (CI) number from 1 to 396, preferably Fluorescent Brightener CI 1, CI 40, CI 45, CI 48, CI 52, CI 155, CI 162, CI 181, CI 220, CI 236, CI 357 and CI 367.

14. Process as claimed in any one preceding claim wherein the fluorescent material A2) is selected from among the stilbenes, preferably among the sulfonated stilbene-triazines, still more preferably the fluorescent material is Fluorescent Brightener CI 357 or CI 220.

15. Process as claimed in anyone preceding claim wherein the concentration of the fluorescent material A2) in the composition A is comprised between 0.001 and 5 g/l; preferably between 0.005 and 1 g/l; still more preferably it is comprised between 0.05 and 0.5 g/l, still more preferably it is between 0.09 and 0.15 g/l.

16. Process as claimed in any one preceding claim wherein the composition A is a polysiloxane composition that is substantially non-crosslinkable.

17. Process as claimed in any one preceding claim wherein the auxiliary component is a sound-absorbent polymer foam (301) for reducing the transmission of the noise of the tyre and/or a monitoring device (410) and/or a sealing complex (512).

18. Tyre having an auxiliary component (310, 410, 512) adhered on a first portion of its radially inner surface (113) **characterised in that** it is coated at least on a second portion of the radially inner surface (113) different from the first portion with a composition A comprising A1) at least one release agent and/or lubricant and A2 at least one fluorescent material.

## Patentansprüche

1. Verfahren zur Herstellung von Reifen, die mit Hilfskomponenten bereitgestellt werden, umfassend:
a) Formen eines Reifenrohlings (100) auf einer Formtrommel;
b) Anordnen einer ausdehnbaren Vulkanisationskammer (9), die zumindest teilweise selbstablösend ist;
c) Zurichten, Formen und Vulkanisieren des Reifenrohlings (100) unter Verwendung der ausdehnbaren Vulkanisationskammer (9) derart, dass ein fertiger Reifen erhalten wird;
d) Anheften einer Hilfskomponente (301, 410, 512) an einem ersten Abschnitt einer radial inneren Oberfläche (113) des Reifens;
wobei das Zurichten, Formen und Vulkanisieren des Reifenrohlings (100) Folgendes umfasst:
c1) Auswählen mindestens eines Reifenrohlings (100) alle n Reifenrohlinge (100), wobei n eine ganze Zahl ist;
c2) Beschichten mindestens eines zweiten Abschnitts der radial inneren Oberfläche (113) des mindestens einen ausgewählten Reifenrohlings (100) mit einer Zusammensetzung A, die A1, mindestens ein Trennmittel und/oder Schmiermittel, und A2, mindestens einen fluoreszierenden Stoff, umfasst;
wobei der zweite Abschnitt auf dem Reifenrohling einem Abschnitt auf dem fertigen Reifen entspricht, der dem ersten Abschnitt nicht überlagert ist;
c3) Auswählen mindestens eines vulkanisierten Reifens alle m vulkanisierten Reifen, wobei m eine ganze Zahl ist;
c4) Verifizieren des möglichen Vorhandenseins der Zusammensetzung A auf dem vulkanisierten Reifen durch Nachweis des fluoreszierenden Stoffs auf dem ersten Abschnitt der radial inneren Oberfläche (113) des Reifens.

2. Verfahren nach Anspruch 1, wobei der Nachweis des fluoreszierenden Stoffs auf dem ersten Abschnitt der radial inneren Oberfläche (113) des Reifens durch Beleuchten der radial inneren Oberfläche (113) des Reifens mittels einer Lichtquelle für fluoreszierende Stoffe, vorzugsweise einer UV-Lampe (615) oder Wood-Lampe, erfolgt.

3. Verfahren nach Anspruch 1 oder 2, wobei c4) ferner ein Bewerten der Ausdehnung und/oder der Anordnung der Zusammensetzung A auf dem ersten Abschnitt der radial inneren Oberfläche (113) des Reifens umfasst.

4. Verfahren nach einem der vorhergehenden Ansprüche, wobei c4) an einem Reifen, der zufällig aus den vulkanisierten Reifen ausgewählt wird, oder an jedem Reifen nach der Vulkanisation durchgeführt wird.

5. Verfahren nach einem der vorhergehenden Ansprüche, wobei c4) von einem Bediener durchgeführt wird, der das Vorhandensein und/oder die Anordnung und/oder die Ausdehnung des fluoreszierenden Stoffs auf dem ersten Abschnitt des Reifens qualitativ und/oder quantitativ verifiziert und entscheidet, ob der Reifen dem nachfolgenden Schritt des Aufbringens der Hilfskomponente (301, 410, 512) oder einem Reinigungsvorgang zugeführt werden soll.

6. Verfahren nach einem der Ansprüche 1 bis 4, wobei c4) mittels einer Inspektionsvorrichtung durchgeführt wird, die mindestens eine UV-Lampe (615) und mindestens eine Kamera (616) umfasst, die zusammenwirken, um Informationen hinsichtlich des möglichen Vorhandenseins und/oder der möglichen Ausdehnung und/oder Anordnung des fluoreszierenden Stoffs auf dem ersten Abschnitt des Reifens zu erfassen.

7. Verfahren nach Anspruch 6, wobei die mindestens eine Kamera (616) der Inspektionsvorrichtung (610) dafür eingerichtet ist, die Informationen zu verarbeiten und/oder an eine Verarbeitungseinheit zu senden, die einen Bediener im Fall einer möglicherweise bei dem Reifen auftretenden Unregelmäßigkeit warnen und/oder den Reifen dem nachfolgenden Schritt des Aufbringens der Hilfskomponente (301, 410, 512) oder einem Reinigungsvorgang zuordnen kann.

8. Verfahren nach einem der vorhergehenden Ansprüche, wobei c2) Beschichtungszonen der radial inneren Oberfläche (113) der undurchlässigen Elastomermaterialschicht (112) umfasst, die an den Wülsten (103) und gegebenenfalls an den Seitenwänden (108) und Kanten (110) und/oder über die Kanten (110) des mindestens einen ausgewählten Reifenrohlings hinaus angeordnet sind.

9. Verfahren nach einem der vorhergehenden Ansprüche, wobei c2) Beschichtungszonen der radial inneren Oberfläche (113) der undurchlässigen Elastomermaterialschicht (112), ausgenommen den Kronenabschnitt (C), umfasst.

10. Verfahren nach einem der vorhergehenden Ansprüche, wobei der fluoreszierende Stoff A2) aus sowohl organischen als auch anorganischen fluoreszierenden Farbstoffen oder Pigmenten ausgewählt wird.

11. Verfahren nach einem der vorhergehenden Ansprüche, wobei der fluoreszierende Stoff A2) organisch ist.

12. Verfahren nach einem der vorhergehenden Ansprüche, wobei der fluoreszierende Stoff A2) zu der Gruppe gehört, die ausgewählt ist aus Stilbenen, wie etwa Stilbentriazinen und Stilbennaphthalentriazolen, gegebenenfalls sulfoniert; Cumarinen und Aminocumarinen; Imidazolinen, Diazolen, Triazolen, Pyrazolen, Pyrazolinen, Benzoxazolen und Benzoxazolinen, Biphenylstilbenen, Phenylethylenen, Benzimidazolen, Ethylenharnstoffen, Naphthalimiden, Xanthenen und Thiophen-benzoxazolen, nicht jedoch darauf beschränkt ist.

13. Verfahren nach einem der vorhergehenden Ansprüche, wobei der fluoreszierende Stoff A2) ausgewählt wird aus löslichen fluoreszierenden Stoffen, als optische Aufheller bezeichnet und mit der Farbzahl (CI, Colour Index (engl.)) von 1 bis 396 gekennzeichnet, vorzugsweise den optischen Aufhellern CI 1, CI 40, CI 45, CI 48, CI 52, CI 155, CI 162, CI 181, CI 220, CI 236, CI 357 und CI 367.

14. Verfahren nach einem der vorhergehenden Ansprüche, wobei der fluoreszierende Stoff A2) ausgewählt wird aus den Stilbenen, vorzugsweise aus den sulfonierten Stilbentriazinen, noch mehr bevorzugt der fluoreszierende Stoff ein optischer Aufheller CI 357 oder CI 220 ist.

15. Verfahren nach einem der vorhergehenden Ansprüche, wobei die Konzentration des fluoreszierenden Stoffs A2) in der Zusammensetzung A im Bereich zwischen 0,001 und 5 g/l, vorzugsweise zwischen 0,005 und 1 g/l liegt; noch mehr bevorzugt im Bereich zwischen 0,05 und 0,5 g/l liegt, noch mehr bevorzugt zwischen 0,09 und 0,15 g/l liegt.

16. Verfahren nach einem der vorhergehenden Ansprüche, wobei die Zusammensetzung A eine Polysiloxan-Zusammensetzung ist, die im Wesentlichen nicht vernetzbar ist.

17. Verfahren nach einem der vorhergehenden Ansprüche, wobei die Hilfskomponente ein schallabsorbierender Polymerschaum (301) zur Verringerung der Übertragung des Reifengeräusches und/oder eine Überwachungsvorrichtung (410) und/oder ein Dichtungskomplex (512) ist.

18. Reifen mit einer Hilfskomponente (310, 410, 512), die an einem ersten Abschnitt seiner radial inneren Oberfläche (113) haftet, **dadurch gekennzeichnet, dass** er auf mindestens einem zweiten Abschnitt der radial inneren Oberfläche (113), der sich von dem ersten Abschnitt unterscheidet, mit einer Zusammensetzung A beschichtet ist, die A1), mindestens ein Trennmittel und/oder Schmiermittel, und A2), mindestens einen fluoreszierenden Stoff, umfasst.

## Revendications

1. Procédé de production de pneus dotés de composants auxiliaires, comprenant le fait :
a) de former un pneu cru (100) sur un tambour de formation ;
b) d'agencer une chambre de vulcanisation expansible (9) qui est au moins partiellement auto-décollante ;
c) de mettre en forme, de mouler et de vulcaniser le pneu cru (100) en utilisant ladite chambre de vulcanisation expansible (9) de manière à obtenir un pneu fini ;
d) de faire adhérer un composant auxiliaire (301, 410, 512) sur une première partie d'une surface radialement interne (113) du pneu ;
dans lequel la mise en forme, le moulage et la vulcanisation du pneu cru (100) comprennent le fait :
c1) de sélectionner au moins un pneu cru (100) tous les n pneus crus (100), où n est un nombre entier ;
c2) de revêtir au moins une deuxième partie de la surface radialement interne (113) dudit au moins un pneu cru sélectionné (100) avec une composition A comprenant A1 au moins un agent de décollage et/ou un lubrifiant et A2 au moins un matériau fluorescent ;
dans lequel ladite deuxième partie sur le pneu cru correspond à une partie sur le pneu fini non superposée sur ladite première partie ;
c3) de sélectionner au moins un pneu vulcanisé tous les m pneus vulcanisés, où m est un nombre entier ;
c4) de vérifier, sur ledit pneu vulcanisé, la présence possible de ladite composition A au moyen de la détection du matériau fluorescent sur ladite première partie de surface radialement interne (113) du pneu.

2. Procédé tel que revendiqué dans la revendication 1, dans lequel la détection du matériau fluorescent sur ladite première partie de surface radialement interne (113) du pneu est réalisée en éclairant la surface radialement interne (113) du pneu au moyen d'une source lumineuse pour matériaux fluorescents, de préférence une lampe UV (615) ou une lampe de Wood.

3. Procédé tel que revendiqué dans la revendication 1 ou 2, dans lequel l'étape c4) comprend en outre
l'évaluation de l'extension et/ou la position de ladite composition A sur ladite première partie de surface radialement interne (113) du pneu.

4. Procédé tel que revendiqué dans l'une quelconque des revendications précédentes, dans lequel l'étape c4) est réalisée sur un pneu choisi aléatoirement parmi les pneus vulcanisés ou sur chaque pneu après vulcanisation.

5. Procédé tel que revendiqué dans l'une quelconque des revendications précédentes, dans lequel l'étape c4) est réalisée par un opérateur qui vérifie qualitativement et/ou quantitativement la présence et/ou la position et/ou l'extension du matériau fluorescent sur la première partie dudit pneu, et décide si le pneu doit être envoyé à l'étape ultérieure d'application du composant auxiliaire (301, 410, 512) ou à une opération de nettoyage.

6. Procédé tel que revendiqué dans l'une quelconque des revendications 1 à 4, dans lequel l'étape c4) est réalisée au moyen d'un appareil d'inspection comprenant au moins une lampe UV (615) et au moins une caméra (616) qui coopèrent afin de détecter des informations concernant la présence et/ou l'extension et/ou la position possible(s) du matériau fluorescent sur la première partie dudit pneu.

7. Procédé tel que revendiqué dans la revendication 6, dans lequel ladite au moins une caméra (616) de l'appareil d'inspection (610) est agencée pour traiter et/ou envoyer les informations à une unité de traitement qui peut avertir un opérateur en cas d'irrégularité éventuellement rencontrée dans le pneu et/ou affecter le pneu à l'étape ultérieure d'application du composant auxiliaire (301, 410, 512) ou à une opération de nettoyage.

8. Procédé tel que revendiqué dans l'une quelconque des revendications précédentes, dans lequel l'étape c2) comprend le revêtement de zones de la surface radialement interne (113) de la couche de matériau élastomère imperméable (112) placées au niveau des talons (103) et éventuellement au niveau des flancs (108) et des bords (110) et/ou au-delà des bords (110) dudit au moins un pneu cru sélectionné.

9. Procédé tel que revendiqué dans l'une quelconque des revendications précédentes, dans lequel l'étape c2) comprend le revêtement de zones de la surface radialement interne (113) de la couche de matériau élastomère imperméable (112), à l'exception de la partie sommet (C).

10. Procédé tel que revendiqué dans l'une quelconque des revendications précédentes, dans lequel ledit matériau fluorescent A2) est choisi parmi des colorants ou pigments fluorescents, organiques et inorganiques.

11. Procédé tel que revendiqué dans l'une quelconque des revendications précédentes, dans lequel le matériau fluorescent A2) est organique.

12. Procédé tel que revendiqué dans l'une quelconque des revendications précédentes, dans lequel le matériau fluorescent A2) appartient au groupe choisi parmi, mais sans s'y limiter, les stilbènes, tels que les stilbène-triazines et les stilbène-naphtalène-triazoles, éventuellement sulfonés ; les coumarines et aminocoumarines ; les imidazolines, les diazoles, les triazoles, les pyrazoles, les pyrazolines, les benzoxazoles et benzoxazolines, les biphénylstilbènes, les phényléthylènes, les benzimidazoles, les éthyleneurées, les naphtalimides, les xanthènes et les thiophène-benzoxazoles.

13. Procédé tel que revendiqué dans l'une quelconque des revendications précédentes, dans lequel le matériau fluorescent A2) est choisi parmi des matériaux fluorescents solubles dénommés Fluorescent Brightener marqués avec le numéro d'Indice de Couleur (CI) de 1 à 396, de préférence Fluorescent Brightener CI 1, CI 40, CI 45, CI 48, CI 52, CI 155, CI 162, CI 181, CI 220, CI 236, CI 357 et CI 367.

14. Procédé tel que revendiqué dans l'une quelconque des revendications précédentes, dans lequel le matériau fluorescent A2) est choisi parmi les stilbènes, de préférence parmi les stilbène-triazines sulfonées, encore plus préférablement le matériau fluorescent est le Fluorescent Brightener CI 357 ou CI 220.

15. Procédé tel que revendiqué dans l'une quelconque des revendications précédentes, dans lequel la concentration du matériau fluorescent A2) dans la composition A est comprise entre 0,001 et 5 g/l ; de préférence entre 0,005 et 1 g/l ; encore plus préférablement elle est comprise entre 0,05 et 0,5 g/l, encore plus préférablement elle est comprise entre 0,09 et 0,15 g/l.

16. Procédé tel que revendiqué dans l'une quelconque des revendications précédentes, dans lequel la composition A est une composition de polysiloxane qui est essentiellement non réticulable.

17. Procédé tel que revendiqué dans l'une quelconque des revendications précédentes, dans lequel le composant auxiliaire est une mousse polymère absorbante acoustique (301) destinée à réduire la transmission du bruit du pneu et/ou un dispositif de surveillance (410) et/ou un complexe d'étanchéité (512).

18. Pneu ayant un composant auxiliaire (310, 410, 512) adhérant sur une première partie de sa surface radialement interne(113), **caractérisé en ce qu'**il est revêtu au moins sur une deuxième partie de la surface radialement interne (113) différente de la première partie avec une composition A comprenant A1) au moins un agent de décollage et/ou un lubrifiant et A2 au moins un matériau fluorescent.
